# EUROPÄISCHE PATENTSCHRIFT

(11) **EP 3 798 457 B1**
(45) Veröffentlichungstag und Bekanntmachung des Hinweises auf die Patenterteilung: **22.03.2023**
(21) Anmeldenummer: 20196127.3
(22) Anmeldetag: 15.09.2020
(51) Int. Cl.: F16C 19/54, F16C 41/04, F16C 43/06, F16C 33/51, F16C 19/36

(54) **MONTAGEWERKZEUG UND VERFAHREN ZUM MONTIEREN EINES LAGERS MIT DIESEM MONTAGEWERKZEUG**
ASSEMBLY TOOL AND METHOD OF ASSEMBLING A BEARING WITH THIS ASSEMBLY TOOL
OUTIL DE MONTAGE ET MÉTHODE D'ASSEMBLAGE D'UN ROULEMENT AVEC CET OUTIL DE MONTAGE

(30) Priorität: 30.09.2019 DE 102019214953
(43) Veröffentlichungstag der Anmeldung: 31.03.2021
(73) Patentinhaber: Aktiebolaget SKF, 415 50 Göteborg (SE)
(72) Erfinder: Reugels, Michael, 97478 Knetzgau (DE); Fritz, Dominik, 97070 Würzburg (DE)
(74) Vertreter: Kuhstrebe, Jochen

(56) Entgegenhaltungen:
- WO-A1-2015/108132
- DE-A1-102014 205 190
- JP-A- 2014 020 507
- US-A- 3 696 490

## Beschreibung

Vorliegende Erfindung betrifft ein Montagewerkzeug zum Montieren eines Lagerrings mit Wälzkörpern gemäß dem Oberbegriff von Patentanspruch 1. Die vorliegende Erfindung betrifft des Weiteren ein Verfahren zum Montieren eines Lagers mit einem Innenring und einem Außenring gemäß dem Oberbegriff von Patentanspruch 8.

Für Kegelrollenlageranordnungen in Turbinen, beispielsweise zur Lagerung einer Hauptwelle einer Windturbine, werden derzeit Kegelrollenlager mit einteiligen Käfigen verwendet. In Turbinenanwendungen, bei denen die Kegelrollenlager in einer O-Anordnung eingesetzt werden und einen Durchmesser von mehreren Metern haben, ist es aufgrund der Größe der Turbinen nicht möglich, diese zur Montage des zweiten Kegelrollensatzes der O-Anordnung umzudrehen. Daher wird das Kegelrollenlager, welches in der Endanordnung oben ist, bislang mit einem Käfig ausgestattet, so dass zunächst der Außenring montiert werden kann und anschließend der Innenring mit den Wälzkörpern, die durch den Käfig gehalten werden, mit dem schmalen Durchmesser nach unten eingesetzt werden kann. Bei dieser Kopfübermontage ist jedoch die Verwendung von einteiligen Lagerkäfigen essenziell, da die Wälzkörper ohne einen solchen Lagerkäfig oder mit Lagerkäfigen, die aus einzelnen Käfigtaschensegmenten bestehen, während der Montage herausfallen würden.

Die einteiligen Käfige hingegen stellen eine Selbst-Haltefunktion der Kegelrollen während der Montage sicher und ermöglichen so, dass ein Innenring mit einem Kegelrollensatz in einer Kopfüberposition montiert werden kann. Diese massiven Käfige sind jedoch sehr teuer in der Herstellung und benötigen häufig zusätzliche Elemente an dem Lagerinnenring, wie beispielsweise eine spezifische Oberflächentopografie der Führungsflächen, was zusätzliche Kosten verursacht. Des Weiteren kann die Führung eines Käfigs an dem Innenring oder den Kegelrollen einem Gleitkontakt unterworfen sein, der den Verschleiß des Lagers erhöhen kann.

JP 2014 020507 A offenbart ein Montagewerkzeug nach dem Oberbegriff des Anspruchs 1.

Es ist deshalb eine Aufgabe der vorliegenden Erfindung, eine Möglichkeit bereitzustellen,

Lager für eine solche Turbinenanwendung mit Käfigsegmenten zu verwenden.

Diese Aufgabe wird durch ein Montagewerkzeug zum Montieren eines Lagerrings mit Wälzkörpern gemäß Patentanspruch 1 und ein Verfahren zum Montieren eines Lagers mit einem Innenring und einem Außenring gemäß Patentanspruch 8 gelöst.

Das Montagewerkzeug zum Montieren eines Lagerrings mit Wälzkörpern weist einen Ring auf, der dazu ausgebildet ist, an einer Seitenfläche des Lagerrings angeordnet zu werden. Bei dem Lagerring kann es sich um einen Lagerinnenring oder um einen Lageraußenring handeln. Der Ring des Montagewerkzeugs kann einstückig oder segmentiert ausgebildet sein.

Das Montagewerkzeug weist des Weiteren Schieberelemente auf, wobei die Schieberelemente umfänglich gleichmäßig um den Ring verteilt sind. Der Ring weist Aufnahmen für die Schieberelemente auf. Die Schieberelemente können dabei in einer axialen Richtung bezüglich des Rings und/oder einer radialen Richtung relativ zum Ring verschoben werden. Die Anzahl der Schieberelemente kann gleich der Anzahl der Wälzkörper sein. Alternativ können auch weniger Schieberelemente als Wälzkörper vorgesehen sein. In beiden Fällen können alle oder nur ein Teil der Schieberelemente, beispielsweise jedes zweite, in die Endposition verschoben werden.

Die Aufnahmen können auf beliebige Weise hergestellt werden, beispielsweise als Durchgangsöffnungen wie Bohrungen, gefräste Löcher oder durch andere Herstellungsarten. Die Schieberelemente können von einer Anfangsposition, in der das Montagewerkzeug bewegt werden kann und die Schieberelemente nicht relativ zu dem Ring verschoben sind, in eine Endposition verschoben werden, wobei die Schieberelemente in der Endposition vollständig relativ zu dem Ring verschoben sind, beispielsweise vollständig durch Durchgangsöffnungen durchgeschoben sind. Die Schieberelemente können jeweils aus einem profilierten, vorzugsweise röhrenförmigen Abschnitt bzw. einem Stift bestehen, der durch die Durchgangsöffnung durchgeschoben werden kann.

Üblicherweise wird ein Lager mit montiertem Außen- und Innenring und dazwischen angeordneten Wälzkörpern sowie Käfigsegmenten geliefert. Um das Lager zu montieren, wird das Montagewerkzeug auf den Lagerring (insbesondere den großen Durchmesser eines Innenrings) aufgesetzt und die Schieberelemente in ihre Endposition verschoben. Der Lagerring kann nun mit dem Montagewerkzeug, den Wälzkörpern und den Käfigsegmenten aus dem Lager herausgehoben werden und die beiden Lagerringe können getrennt voneinander montiert werden.

Alternativ kann das Montagewerkzeug auf den Lagerring (insbesondere den großen Durchmesser eines Innenrings) aufgesetzt werden und der Lagerring einzeln mit einer Kombination aus Wälzkörpern und Käfigsegmenten bestückt und die Schieberelemente nach und nach in ihre Endposition verschoben werden.

Dabei kann jeder Wälzkörper mit einem einzelnen Käfigsegment ausgestattet sein oder ein Käfigsegment kann für mehrere Wälzkörper vorgesehen sein. Bevorzugt ist hier jeder zweite Wälzkörper in einer Tasche eines Käfigsegments angeordnet, wobei Wandungen oder Stege des Käfigsegments jeweils zwischen zwei Wälzkörpern angeordnet sind. Des Weiteren können die Käfigsegmente als Abstandshalter zwischen den Wälzkörpern ausgebildet sein.

In diesen Fällen wird durch das Montagewerkzeug aus dem Lagerring mit den Wälzkörpern und den Käfigsegmenten eine Anordnung gebildet, die als ein Ganzes bewegt, insbesondere auf eine Nabeneinheit aufgesetzt, werden kann, ohne dass die Wälzkörper von dem Lagerring herunterfallen. Hierzu sind die Schieberelemente dazu ausgebildet, in der Endposition jeweils zwischen zwei Wälzkörpern und an einer Kontaktfläche einer zwischen den zwei Wälzkörpern angeordneten Wandung eines Käfigsegments angeordnet zu sein. Durch diese Anordnung der Schieberelemente kann eine radiale Beweglichkeit der Wälzkörper bezüglich des Lagerrings begrenzt werden. Die Schieberelemente übernehmen dabei die Funktion eines Lagerkäfigs, so dass die Wälzkörper zwischen den Schieberelementen und dem Lagerring gesichert sind. Die Verwendung eines einteiligen Lagerkäfigs kann somit entfallen. Stattdessen können einzelne Käfigsegmente verwendet werden, in die die Schieberelemente eingreifen. Solche Käfigsegmente können jeweils einen oder auch mehrere Wälzkörper aufnehmen. Des Weiteren können die Käfigsegmente als Abstandshalter, welche die Rolle nicht vollständig umschließen, zwischen den Wälzkörpern ausgebildet sein.

Auf diese Weise kann ein kompaktes Modul aus dem Lagerring mit den Wälzkörpern und den Käfigsegmenten sowie dem Montagewerkzeug gebildet werden. Dieses Modul kann dann als Ganzes beispielsweise in einen Außenring eingesetzt werden. Das Modul aus Lagerring, Wälzkörper, Käfigsegmenten und Montagewerkzeug kann dann in eine Lageranordnung eingesetzt oder auch wieder aus dieser entfernt werden.

Handelt es sich bei dem Lagerring um den Lagerinnenring, sind gemäß einer Ausführungsform die Schieberelemente in ihrer Endposition in dem freien Raum radial außerhalb des Teilkreisdurchmessers zwischen zwei Wälzkörpern, der Kontaktfläche des Käfigsegments und der Laufbahn des Außenrings angeordnet. Alternativ kann es sich bei dem Lagerring um den Außenring handeln, wobei die Schieberelemente dann in ihrer Endposition in dem freien Raum radial innerhalb des Teilkreisdurchmessers zwischen zwei Wälzkörpern, der Kontaktfläche des Käfigsegments und der Laufbahn des Innenrings angeordnet sind. Durch diese Anordnung kann sichergestellt werden, dass die Wälzkörper sich nicht von dem Innenring bzw. dem Außenring entfernen können.

Gemäß der beanspruchten Erfindung sind die Schieberelemente winklig bezüglich der Ringfläche verschiebbar. Die Schieberelemente bilden dabei in ihrer Endposition eine Kegelstumpfform, wobei sich diese Kegelstumpfform an der Kegelstumpfform, die von den Rollenachsen gebildet wird, orientiert. Der Durchmesser des Kreises, der durch die Schieberelemente in ihrer Anfangsposition gebildet wird, ist somit größer als der Durchmesser des Kreises, der durch die Schieberelemente in ihrer Endposition gebildet wird, oder umgekehrt.

Gemäß einer weiteren Ausführungsform weist das Montagewerkzeug ein Zentrierelement auf, um den Ring an dem Außendurchmesser eines Führungsflanschs des Lagerrings zu zentrieren. Durch das Zentrierelement kann so eine exakte radiale Position des Montagewerkzeugs in Bezug auf den Lagerring sichergestellt werden.

Gemäß einer weiteren Ausführungsform weist das Montagewerkzeug ein Befestigungselement auf, um den Ring an dem Lagerring zu befestigen. Ein solches Befestigungsmittel kann beispielsweise als eine Klemm- oder Schraubvorrichtung ausgestaltet sein. Durch ein solches Befestigungsmittel kann eine Sicherung des Montagewerkzeugs an dem Lagerring sichergestellt werden. Des Weiteren kann der Ring rotierend auf dem Lagerring befestigt werden. Hierzu können beispielsweise Rollen vorgesehen sein, die eine Rotation des Rings bezüglich des Lagerrings ermöglichen.

Gemäß einer weiteren Ausführungsform weist das Montagewerkzeug ein Abstandsmittel zum Einstellen eines axialen Abstands zwischen dem Ring und dem Lagerring und/oder ein Abstandsmittel zum Einstellen eines radialen Abstands zwischen den Schieberelementen und den Laufbahnen der Wälzkörper auf. Die Abstandsmittel können beispielsweise als einstellbare Abstandsmittel ausgebildet sein, so dass der axiale Abstand zwischen dem Ring und dem Lagerring und/oder der radiale Abstand zwischen den Schieberelementen und der Laufbahn der Wälzkörper variabel eingestellt werden. Auf diese Weise kann das Montagewerkzeug für verschiedene Größen an Wälzkörpern verwendet werden.

Gemäß einer weiteren Ausführungsform weist das Montagewerkzeug ein Halteelement auf, um die Schieberelemente in ihrer Anfangsposition und/oder Endposition und/oder in einer oder mehreren Zwischenpositionen zu halten. Ein solches Haltemittel kann als Verriegelungselement ausgebildet sein. Beispielsweise kann das Halteelement ein Stift oder Hebel sein, der über eine Halteplatte der Schieberelemente bewegt werden kann, um die Schieberelemente in ihrer oberen oder unteren, d. h. Anfangs- bzw. Endposition, zu halten. Alternativ kann es sich bei dem Haltemittel um eine Klemmvorrichtung, Schraubvorrichtung oder ähnliches handeln. Das Haltemittel kann beispielsweise als federvorgespannter Bolzen ausgebildet sein. Durch ein solches Haltemittel kann sichergestellt werden, dass die Schieberelemente nicht ungewünscht von ihrer Anfangs- in ihre Endposition verschoben werden oder umgekehrt.

Gemäß einer weiteren Ausführungsform ist der Ring aus einem Metall hergestellt und/oder die Schieberelemente aus einem Kunststoff oder einem Metall hergestellt. Werden die Schieberelemente aus einem Kunststoff hergestellt, können diese leicht elastisch sein, wodurch eine weitere Anpassung an die Wälzkörper bzw. an ein radiales Spiel oder umfängliches Spiel der Wälzkörper möglich ist.

Gemäß einem weiteren Aspekt, der nicht Bestandteil der beanspruchten Erfindung ist, wird ein Käfigsegment für ein Wälzlager vorgeschlagen, wobei das Käfigsegment mindestens einen Steg oder mehrere über Verbindungsplatten verbundene Stege aufweist, wobei der Steg/die Stege zumindest eine Führungsfläche zum Führen der Wälzkörper im montierten Wälzlager aufweist. Die Wälzkörper stehen dabei im montierten Wälzlager mit den Führungsflächen in Kontakt bzw. sind zu diesen in einem geringen Abstand beabstandet. Bevorzugt weist das Käfigsegment zwei Stege auf, wobei zwischen den zwei Stegen eine Tasche gebildet ist, in der ein Wälzkörper aufgenommen werden kann. Bei Verwendung eines solchen Käfigsegments ist jeder zweite Wälzkörper in einer Tasche aufgenommen. Alternativ kann es sich bei dem Käfigsegment um einen reinen Abstandshalter handeln, der zwischen zwei Wälzkörpern angeordnet ist.

Um ein Zusammenwirken des Käfigsegments mit einem wie oben beschriebenen Montagewerkzeug zu ermöglichen, stellt der Steg ein oder mehrere Kontaktflächen für Schieberelemente eines solchen Montagewerkzeugs bereit. Diese Kontaktflächen können in axialer Richtung mittig angeordnet sein (z.B. nur eine einzelne, mittig angeordnete Kontaktfläche) oder in axialer Richtung verteilt angeordnet sein (z.B. zwei axial gegenüberliegende Kontaktflächen). Durch die Kontaktflächen ist das Montagewerkzeug in Eingriff mit den Käfigsegmenten und kann auf diese Weise die einzelnen Käfigsegmenten und damit die Wälzkörper an dem Lagerring sichern. Somit kann auf einen einteiligen Käfig verzichtet werden.

Gemäß einer Ausführungsform sind die Kontaktflächen radial außerhalb und/oder radial innerhalb des Teilkreisdurchmessers der Wälzkörper angeordnet. Wie oben beschrieben ist, sind die Schieberelemente in ihrer Endposition in dem freien Raum radial außerhalb des Teilkreisdurchmessers zwischen zwei Wälzkörpern, der Kontaktfläche des Käfigsegments und der Laufbahn des Außenrings oder in dem freien Raum radial innerhalb des Teilkreisdurchmessers zwischen zwei Wälzkörpern, der Kontaktfläche des Käfigsegments und der Laufbahn des Innenrings angeordnet. Um ein Zusammenwirken der Schieberelemente mit den Käfigsegmenten zu ermöglichen, sind daher die Kontaktflächen ebenfalls radial außerhalb bzw. radial innerhalb des Teilkreisdurchmessers der Wälzkörper angeordnet. Auch die Führungsflächen umfassen die Wälzkörper dann entsprechend außerhalb bzw. innerhalb des Teilkreisdurchmessers. Bevorzugt sind die Kontaktflächen sowohl radial innerhalb als auch radial außerhalb des Teilkreisdurchmessers der Wälzkörper angeordnet, da auf diese Weise die Käfigsegmente flexibel zur Montage sowohl des Lagerinnenrings als auch des Lageraußenrings verwendet werden können.

Gemäß einer weiteren Ausführungsform sind die Kontaktflächen als eine zu dem Außenring und/oder dem Innenring hin offene, in Umfangsrichtung längliche Vertiefung ausgebildet sind. Aufgrund eines Umfangsspiels der Wälzkörper und der Käfigsegmente kann ein Versatz der Käfigsegmente bezüglich der Schieberelemente auftreten. Da die Kontaktflächen jedoch eine umfängliche Ausdehnung haben, können die Schieberelemente auch bei einem Versatz der Käfigsegmente in die Kontaktflächen eingeschoben werden. Durch die umfängliche Ausdehnung der Kontaktflächen muss keine Verschiebemöglichkeit der Schieberelemente in umfänglicher Richtung vorgesehen werden. Um eine Montage des Montagewerkzeugs bzw. der Schieberelemente zu erleichtern, kann eine Verschiebemöglichkeit der Schieberelemente relativ zum Ring in umfänglicher Richtung jedoch vorgesehen werden.

Die Kontaktflächen können eine umfängliche Breite aufweisen, die dem Schieberelement ein umfängliches Spiel relativ zur Kontaktfläche gewähren. Das Umfangsspiel der Wälzkörper entspricht vorzugsweise dem 0,5 bis 1,5-fachen des Umfangsspiel der Wälzkörper.

Um sicherzustellen, dass sich die Käfigsegmente in Bezug auf die Schieberelemente umfänglich nicht beliebig verschieben können oder die Käfigsegmente den Kontakt zu den Schieberelementen verlieren, können die Kontaktflächen in Umfangsrichtung einen Anschlag aufweisen. Dieser Anschlag kann in beide umfängliche Richtungen vorgesehen sein. Durch den Anschlag wird die Bewegung der Schieberelemente, sobald sie in die Käfigsegmente eingeschoben sind, in umfänglicher Richtung beschränkt.

Gemäß einem weiteren Aspekt wird ein Verfahren zum Montieren eines Lagers mit einem Innenring und einem Außenring vorgeschlagen. Das Verfahren weist die Schritte auf: Anordnen des Innenrings, Anordnen der Wälzkörper und Käfigsegmente an dem Innenring, Anordnen des oben beschriebenen Montagewerkzeugs an dem Innenring, Verschieben der Schieberelemente des Montagewerkzeugs in ihre jeweilige Endposition, so dass die Schieberelemente jeweils zwischen zwei Wälzkörpern und an einer Kontaktfläche einer zwischen den zwei Wälzkörpern angeordneten Wandung eines Käfigsegments angeordnet sind, um eine radiale Beweglichkeit der Wälzkörper bezüglich des Lagerrings zu begrenzen (d.h. ein Herausfallen der Wälzkörper zu verhindern), Einsetzen des Innenrings mit dem Montagewerkzeug und den Wälzkörpern auf eine Hülse oder Welle und/oder in den Außenring, und Entfernen des Montagewerkzeugs. Bei der Hülse oder Welle kann es sich insbesondere um ein Element einer Nabeneinheit einer Turbine handeln.

Um den Innenring wieder von der Hülse oder Welle abzunehmen, kann das Montagewerkzeug erneut an dem Innenring angebracht werden und die Schieberelemente verschoben werden, um die Wälzkörper an dem Innenring zu halten. Dann kann der Innenring samt den Wälzkörpern und dem Montagewerkzeug entfernt werden.

Durch die Verwendung des Montagewerkzeugs ist es möglich, auf einen einteiligen Käfig zu verzichten, da die Schieberelemente die Funktion eines Lagerkäfigs übernehmen, so dass die Wälzkörper zwischen den Schieberelementen und dem Lagerring gesichert sind. Das Lager kann daher mit einzelnen Käfigsegmenten verwendet werden, in die die Schieberelemente des Montagewerkzeugs eingreifen. Durch ein solches Montageverfahren ist es daher möglich, einen Lagerring mit den Wälzkörpern ohne einteiligen Käfig als Ganzes zu bewegen. Dies ist insbesondere für Anwendungen mit Großwälzlagern, wie beispielsweise für Turbinen erforderlich, wie oben beschrieben ist

Gemäß einem weiteren Aspekt, der nicht Bestandteil der beanspruchten Erfindung ist, wird ein Lager mit einem Innenring und einem Außenring, zwischen denen Wälzkörper angeordnet sind, die durch Käfigsegmente gehalten sind, vorgeschlagen. Das Lager kann insbesondere durch das oben beschriebene Montageverfahren montiert werden.

Gemäß einem weiteren Aspekt, der nicht Bestandteil der beanspruchten Erfindung ist, wird eine Nabeneinheit für eine Turbine mit zwei Kegelrollenlagern, die in einer O-Anordnung angeordnet sind, vorgeschlagen, wobei die Kegelrollenlager jeweils einen Innenring und einen Außenring aufweisen, zwischen denen jeweils Kegelrollen angeordnet sind, die durch Käfigsegmente gehalten werden. Zumindest eines der Kegelrollenlager kann durch das oben beschriebene Montageverfahren montiert werden, wodurch kein einteiliger Käfig erforderlich ist. Stattdessen kann das Lager mit Käfigsegmenten verwendet werden, wie oben detaillierter beschrieben ist.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Montagewerkzeugs;
- Fig. 2:: eine perspektivische Detailansicht eines Käfigsegments zur Verwendung mit dem Montagewerkzeug von Fig. 1;
- Fig. 3:: eine perspektivische Ansicht einer Anordnung des Montagewerkzeug und eines Lagerrings;
- Fig. 4:: eine weitere perspektivische Ansicht einer Anordnung des Montagewerkzeug und eines Lagerrings;
- Fig. 5:: eine Schnittansicht einer Nabeneinheit einer Turbine mit aufgesetztem Montagewerkzeug;
- Fig. 6:: eine Schnittansicht der Nabeneinheit von Fig. 5 mit montiertem Lagerrinnenring; und
- Fig. 7:: eine perspektivische Ansicht des Ausschnitts der Nabeneinheit von Fig. 8 mit herausgezogenen Schieberelementen.

Im Folgenden werden gleiche oder funktionell gleichwirkende Elemente mit denselben Bezugszeichen gekennzeichnet.

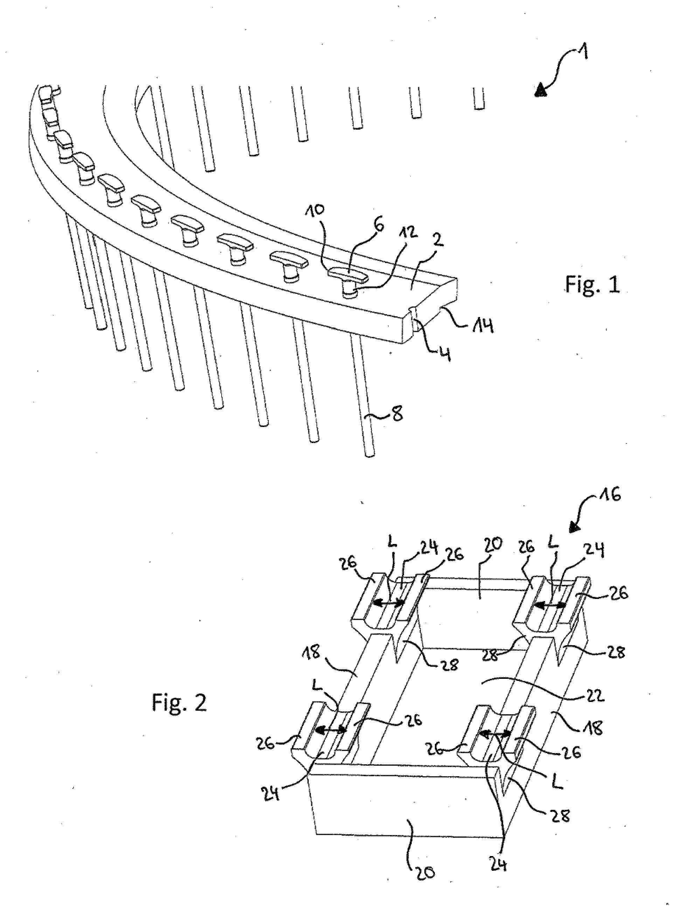

Fig. 1 zeigt eine perspektivische Ansicht eines Montagewerkzeugs 1. Das Montagewerkzeug 1 weist einen Ring 2 auf. In dem Ring 2 sind Durchgangsöffnungen 4 vorgesehen, durch die Schieberelemente 6 durchgeschoben werden können. Die Schieberelemente 6 bestehen aus einem ersten röhrenförmigen Abschnitt 8, der durch die Durchgangsöffnungen 4 durchgeschoben wird, einem Haltegriff 10 und einem zweiten röhrenförmigen Abschnitt 12, an dem der Haltegriff 10 angebracht ist. Der zweite röhrenförmige Abschnitt 12 weist bevorzugt einen größeren Durchmesser als die Durchgangsöffnungen 4 auf, so dass die Einschiebetiefe der Schieberelemente 6 dadurch begrenzt wird. Hierdurch wird die Endposition der Schieberelemente 6 definiert.

Um das Montagewerkzeug 1 an einem Lagerring anzubringen, weist der Ring 2 ein Zentriermittel 14 auf. Das Zentriermittel 14, das als Kante ausgebildet ist, dient dazu, das Montagewerkzeug 1 auf dem Lagerring anzuordnen, wobei das Zentriermittel 14 an einer Außenseite des Lagerrings, beispielsweise einem Führungsflansch, anliegt.

Obwohl in den Figuren das Montagewerkzeug derart ausgebildet ist, dass es an einem Innenring eines Lagers anordenbar ist, kann das Montagewerkzeug 1 auch so ausgebildet werden, dass es mit einem Außenring eines Lagers verbunden werden kann.

Wird das Montagewerkzeug 1 an einem Lagerring angeordnet, wirkt es mit einem Käfigsegment 16 zusammen, wie es in Fig. 2 dargestellt ist. Ein solches Käfigsegment 16 weist zwei Stege 18 auf, die an ihren jeweiligen Enden mit einer Verbindungs- oder Bodenplatte 20 verbunden sind. Zwischen den Stegen 18 und den Verbindungsplatten 20 wird jeweils eine Tasche 22 zur Aufnahme eines Wälzkörpers, insbesondere einer Kegelrolle, gebildet. Mit den hier gezeigten Käfigsegmenten 16 kann beispielweise jeder zweite Wälzkörper in einem solchen Käfigsegment aufgenommen werden.

Um die Schieberelemente in Kontakt mit den Käfigsegmenten 16 bringen zu können, weisen die Käfigsegmente 16 Kontaktflächen 24 auf. Diese Kontaktflächen 24 haben in umfänglicher Richtung jeweils eine Ausdehnung L, die jeweils durch eine Anschlagsfläche 26 begrenzt ist. Die Anschlagsfläche 26 dient dazu, die Schieberelemente innerhalb der Kontaktfläche 24 zu halten. Durch die Ausdehnung L ist es möglich, ein Spiel der Wälzkörper für die Schieberelemente 6 auszugleichen, da sich diese zwischen den beiden Anschlagsflächen bewegen können. Die Kontaktflächen 24 weisen in Richtung der Wälzkörper gekrümmte Führungsflächen 28 auf. An diesen können die Wälzkörper anstoßen.

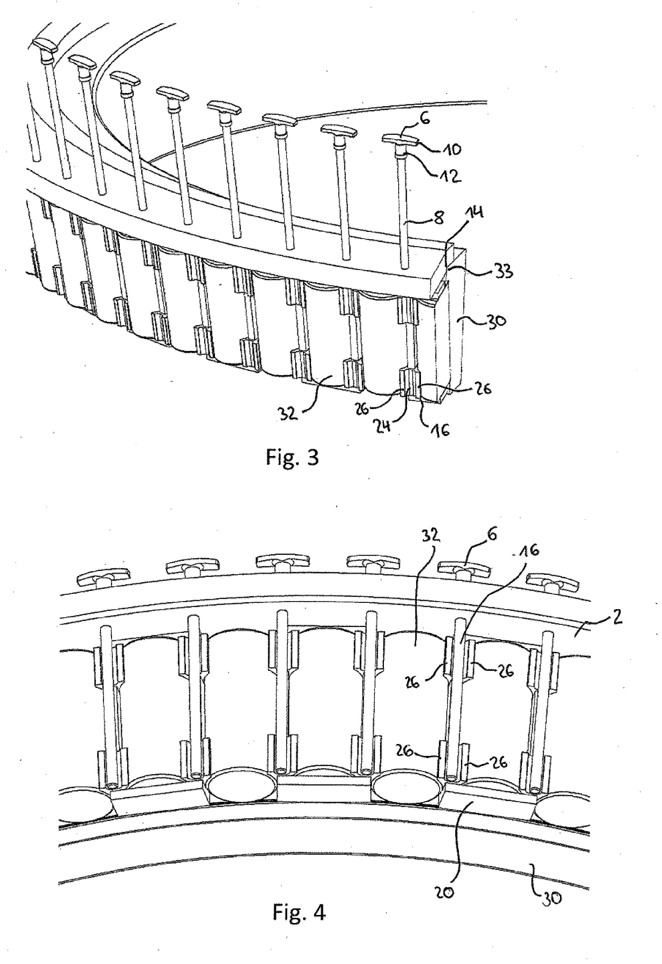

Figuren 3 und 4 zeigen perspektivische Ansichten eines Montagewerkzeugs 1, das an einem Lagerring 30 angeordnet ist. Der Lagerring 30 ist in diesem Fall ein Innenring eines Lagers. Der Innenring 30 ist mit Wälzkörpern 32 bestückt. Das Montagewerkzeug 1 ist in dem in Fig. 3 gezeigten Ausführungsbeispiel an dem Lagerring 30 angeordnet, wobei die Schieberelemente 6 sich in ihrer Anfangsposition befinden. In Fig. 4 befinden sich die Schieberelemente 6 in ihrer Endposition. Wie hier gesehen werden kann, sind die Schieberelemente 6 in ihrer Endposition jeweils zwischen zwei Wälzkörpern 32 des Lagerrings 30 angeordnet. Die Wälzkörper 32 sind durch Käfigsegmente 16 beabstandet. Die Käfigsegmente 16 sind, wie oben beschrieben, so ausgestaltet, dass jeweils ein käfigartiges Segment 16 um jeden zweiten Wälzkörper 32 angeordnet ist, wobei eine Bodenplatte 20 zwei Wandungen bzw. Stege 18 des Käfigsegments 16 verbindet. Wie in Fig. 3 gezeigt ist, liegt das Zentriermittel 14 des Montagewerkzeugs 1 an einem Führungsflansch 33 des Innenrings 30 an.

Die Schieberelemente 6 sind in ihrer Endposition über einem Teilkreisdurchmesser der Wälzkörper 32 angeordnet und sind in Kontakt mit den Kontaktflächen 24 der Käfigsegmente 16. Auf diese Weise sind die Schieberelemente 6 dazu ausgebildet, die Wälzkörper 32 in ihrer Endposition an dem Lagerring 30 zu halten. Durch die Verwendung des Montagewerkzeugs 1 ist es möglich, auf einen einteiligen Käfig zu verzichten und stattdessen, wie hier gezeigt, Käfigsegmente 16 zu verwenden. Da das Montagewerkzeug 1 die Funktion eines Käfigs übernimmt und die Wälzkörper 32 an dem Lagerring 30 sichert, ist es möglich, den Lagerring 30 mit den Wälzkörpern 32 zu bewegen, ohne dass die Wälzkörper 32 herausfallen.

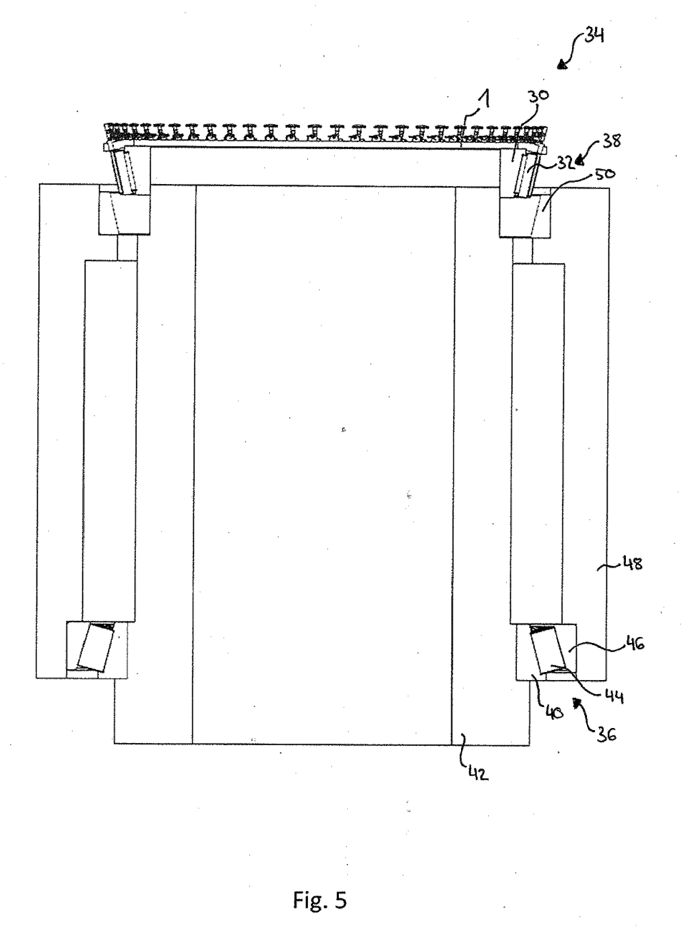

Mit Bezugnahme auf die Figuren 5 bis 7 wird nun ein Montageverfahren eines Lagerrings 30 unter Verwendung des Montagewerkzeugs 1 beschrieben.

Bei der hier gezeigten Montage des Lagerrings 30 handelt es sich um die Montage eines Innenrings 30 auf einer Hülse oder Welle 42 einer Nabeneinheit 34 einer Turbine. Die Nabeneinheit 34 weist zwei Kegelrollenlager 36, 38 auf, die in einer O-Anordnung angeordnet sind. Die Kegelrollenlager 36, 38 werden dabei nur von einer Seite auf der Nabeneinheit 34 montiert, nämlich von der Seite des Kegelrollenlagers 38 aus.

Das Kegelrollenlager 36 weist einen Innenring 40 auf, der auf die Hülse oder Welle 42 aufgeschoben ist. Bei der Montage des Kegelrollenlagers 36 können die Wälzkörper 44 einfach auf dem Innenring 40 angeordnet werden, da durch die O-Anordnung die Wälzkörper 44 nicht herunterfallen können. Anschließend wird ein Außenring 46 an dem Wälzlager 36 angebracht. Ein Gehäuse 48 kann anschließend angebracht werden, um das Lager zu schützen.

Um nun das Lager 38 zu montieren, ist es erforderlich, entweder die Nabeneinheit 34 umzudrehen, was aufgrund der Größe der Nabeneinheit 34 von mehreren Metern Durchmesser schwierig durchzuführen ist. Alternativ muss das Lager 38 ebenfalls von oben, wie das Lager 36, montiert werden. Da jedoch dabei die Wälzkörper 32 nicht an dem Lagerinnenring 30 angebracht werden können, um diesen in den Außenring 50 einzusetzen, da die Wälzkörper in diesem Fall aufgrund der Gravitationskraft herausfallen würden, war es bislang erforderlich, einen einteiligen Käfig zu verwenden, um die Wälzkörper 32 an dem Lagerring 30 zu halten. Dies kann jedoch durch das Montagewerkzeug 1 vermieden werden.

Wie in Figuren 5 bis 7 gezeigt ist, wird das Montagewerkzeug 1 auf den Lagerring 30 aufgesetzt und die Schieberelemente 6 werden in ihre Endposition verschoben. Durch diese Positionierung des Montagewerkzeugs 1 werden die Wälzkörper 32 an dem Lagerring 30 gehalten, wie mit Bezugnahme auf die Figuren 1 bis 4 beschrieben ist. Dieses Modul bestehend aus dem Montagewerkzeug 1, dem Lagerinnenring 30, den Käfigsegmenten 16 und den Wälzkörpern 32 kann nun einfach auf die Hülse 42 aufgeschoben werden. Hierbei kann der Lageraußenring 50 bereits angeordnet sein, wie in Fig. 5 dargestellt ist.

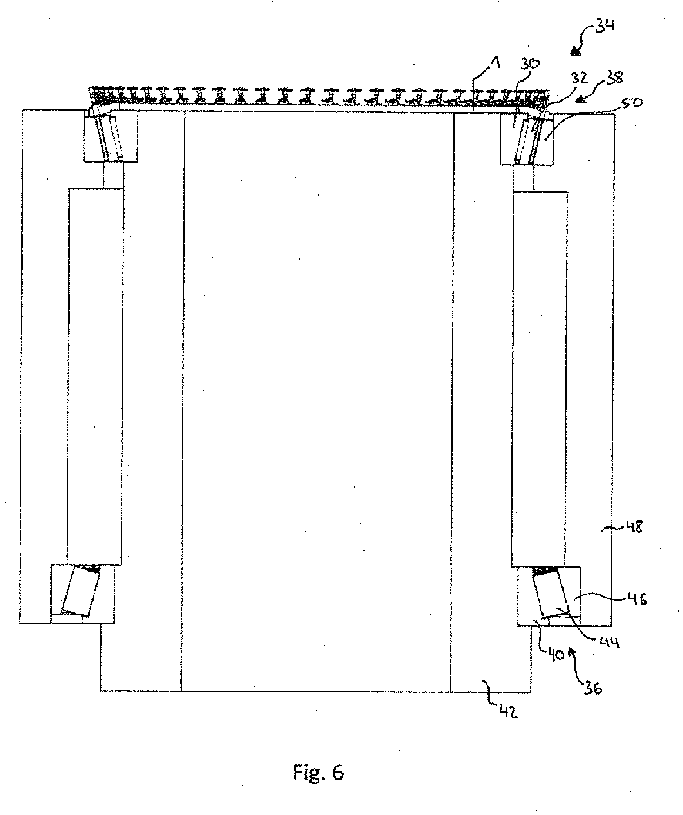

Wie in Fig. 6 zeigt, kann der Lagerinnenring 30 als kompaktes Modul mit den Wälzkörpern 32 und dem Montagewerkzeug 1 auf die Hülse 42 aufgeschoben werden.

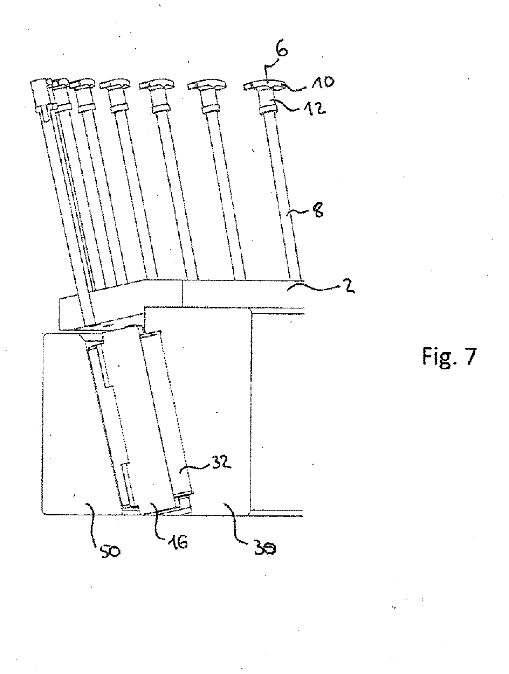

Sobald die Lagerringe 30, 50 und die Wälzkörper 32 korrekt positioniert sind, kann das Montagewerkzeug 1 wieder entfernt werden. Dies ist in Fig. 7 dargestellt, in der gezeigt ist, wie die Schieberelemente 6 aus der zusammengesetzten Lageranordnung herausgezogen werden. Nach dem Herausziehen der Schieberelemente 6 kann das Montagewerkzeug 1 auf einfache Weise wieder entfernt werden.

Durch das hier gezeigte Montagewerkzeug ist eine einfache Montage eines Lagerrings mit Wälzkörpern ohne Verwendung eines einteiligen Käfigs möglich.

### Bezugszeichenliste

- 1: Montagewerkzeug
- 2: Ring
- 4: Durchgangsöffnung/Aufnahme
- 6: Schieberelement
- 8: erster röhrenförmiger Abschnitt
- 10: Haltegriff
- 12: zweiter röhrenförmiger Abschnitt
- 14: Zentriermittel
- 16: Käfigsegment
- 18: Steg
- 20: Verbindungs-/Bodenplatte
- 22: Tasche
- 24: Kontaktfläche
- 26: Anschlag
- 28: Führungsfläche
- 30: Innenring
- 32: Wälzkörper
- 33: Führungsflansch
- 34: Nabeneinheit
- 36: Kegelrollenlager
- 38: Kegelrollenlager
- 40: Innenring
- 42: Hülse/Welle
- 44: Wälzkörper
- 46: Außenring
- 48: Gehäuse
- 50: Außenring
- L: Ausdehnung

## Patentansprüche

1. Montagewerkzeug (1) für einen Lagerring (30) mit Wälzkörpern (32), wobei das Montagewerkzeug (1) einen Ring (2), der dazu ausgebildet ist, an einer Seitenfläche des Lagerrings (30) angeordnet zu werden, und Schieberelemente (6) aufweist, wobei der Ring (2) Aufnahmen (4) für die Schieberelemente (6) aufweist und wobei die Schieberelemente (6) umfänglich gleichmäßig um den Ring (2) verteilt sind und dazu ausgebildet sind, von einer Anfangsposition in eine Endposition relativ zu dem Ring (2) verschoben zu werden, wobei die Schieberelemente (6) des Weiteren dazu ausgebildet sind, in der Endposition jeweils zwischen zwei Wälzkörpern (32) und an einer Kontaktfläche (24) einer zwischen den zwei Wälzkörpern (32) angeordneten Wandung (18) eines Käfigsegments (16) angeordnet zu sein, um eine radiale Beweglichkeit der Wälzkörper (32) bezüglich des Lagerrings (30) zu begrenzen, **dadurch gekennzeichnet, dass** die Schieberelemente (6) winklig bezüglich der Ringfläche verschiebbar sind, so dass die Schieberelemente (6) in ihrer Endposition eine Kegelstumpfform bilden.

2. Montagewerkzeug nach Anspruch 1, wobei der Lagerring (30) ein Innenring ist und die Schieberelemente (6) in ihrer Endposition in dem freien Raum radial außerhalb des Teilkreisdurchmessers zwischen zwei Wälzkörpern (32), der Kontaktfläche (24) des Käfigsegments (16) und der Laufbahn eines Außenrings (50) angeordnet sind oder wobei der Lagerring (50) ein Außenring ist und die Schieberelemente (6) in ihrer Endposition in dem freien Raum radial innerhalb des Teilkreisdurchmessers zwischen zwei Wälzkörpern (32), der Kontaktfläche (24) des Käfigsegments (16) und der Laufbahn eines Innenrings (30) angeordnet sind.

3. Montagewerkzeug nach einem der vorhergehenden Ansprüche, wobei das Montagewerkzeug (1) ein Zentrierelement (14) aufweist, um den Ring (2) an dem Außendurchmesser eines Führungsflanschs (33) des Lagerrings (30) zu zentrieren.

4. Montagewerkzeug nach einem der vorhergehenden Ansprüche, wobei das Montagewerkzeug ein Befestigungsmittel aufweist, um den Ring (2) an dem Lagerring (30) zu befestigen.

5. Montagewerkzeug nach einem der vorhergehenden Ansprüche, wobei das Montagewerkzeug (1) ein Abstandsmittel zum Einstellen eines axialen Abstands zwischen dem Ring (2) und dem Lagerring (30) und/oder ein Abstandsmittel zum Einstellen eines radialen Abstands zwischen den Schieberelementen (6) und den Laufbahnen der Wälzkörper (32) aufweist.

6. Montagewerkzeug nach einem der vorhergehenden Ansprüche, wobei das Montagewerkzeug (1) ein Halteelement aufweist, um die Schieberelemente (6) in ihrer Anfangsposition und/oder Endposition und/oder ein oder mehreren Zwischenpositionen zu halten.

7. Montagewerkzeug nach einem der vorhergehenden Ansprüche, wobei der Ring (2) aus einem Metall hergestellt ist und/oder wobei die Schieberelemente (6) aus einem Kunststoff und/oder einem Metall hergestellt sind.

8. Verfahren zum Montieren eines Lagers (34) mit einem Innenring (30) und einem Außenring (50), zwischen denen Wälzkörper (32) angeordnet sind, **dadurch gekennzeichnet, dass** das Verfahren die Schritte aufweist:
Anordnen des Innenrings (30),
Anordnen der Wälzkörper (32) und der Käfigsegmente (16) an dem Innenring (30), Anordnen des Montagewerkzeugs (1) nach einem der Ansprüche 1 bis 8 an dem Innenring (30),
Verschieben der Schieberelemente (6) des Montagewerkzeugs (1) in ihre jeweilige Endposition, so dass die Schieberelemente (6) jeweils zwischen zwei Wälzkörpern (32) und an einer Kontaktfläche (24) einer zwischen den zwei Wälzkörpern (32) angeordneten Wandung (18) eines Käfigsegments angeordnet sind, um eine radiale Beweglichkeit der Wälzkörper (32) bezüglich des Lagerrings (30) zu begrenzen, wobei die Schieberelemente (6) winklig bezüglich der Ringfläche verschoben werden, so dass die Schieberelemente (6) in ihrer Endposition eine Kegelstumpfform bilden, Einsetzen des Innenrings (30) mit dem Montagewerkzeug (1) und den Wälzkörpern (32) auf eine Hülse oder Welle (42) und/oder den Außenring (50), und Entfernen des Montagewerkzeugs (1).

## Claims

1. Assembly tool (1) for a bearing ring (30) having rolling members (32), wherein the assembly tool (1) has a ring (2) which is configured to be disposed on a lateral face of the bearing ring (30), and sliding elements (6), wherein the ring (2) has receptacles (4) for the sliding elements (6), and wherein the sliding elements (6) are distributed uniformly about the circumference of the ring (2) and are configured to be displaced relative to the ring (2) from an initial position to a terminal position, wherein the sliding elements (6) in the terminal position are in each case furthermore configured to be disposed between two rolling members (32) and on a contact face (24) of a wall (18) of a cage segment (16) that is disposed between the two rolling members (32), so as to delimit a radial mobility of the rolling members (32) in relation to the bearing ring (30), **characterized in that** the sliding elements (6) are displaceable at an angle in relation to the ring face such that the sliding elements (6) in the terminal position thereof form the shape of a truncated cone.

2. Assembly tool according to Claim 1, wherein the bearing ring (30) is an inner ring, and the sliding elements (6) in the terminal position thereof are disposed in the void radially outside the pitch circle diameter between two rolling members (32), the contact face (24) of the cage segment (16), and the raceway of an outer ring (50), or wherein the bearing ring (50) is an outer ring, and the sliding elements (6) in the terminal position thereof are disposed in the void radially within the pitch circle diameter between two rolling members (32), the contact face (24) of the cage segment (16), and the raceway of an inner ring (30).

3. Assembly tool according to one of the preceding claims, wherein the assembly tool (1) has a centring element (14) for centring the ring (2) on the external diameter of a guide flange (33) of the bearing ring (30).

4. Assembly tool according to one of the preceding claims, wherein the assembly tool has a fastening means for fastening the ring (2) to the bearing ring (30) .

5. Assembly tool according to one of the preceding claims, wherein the assembly tool (1) has a spacing means for adjusting an axial spacing between the ring (2) and the bearing ring (30), and/or a spacing means for adjusting a radial spacing between the sliding elements (6) and the raceways of the rolling members (32).

6. Assembly tool according to one of the preceding claims, wherein the assembly tool (1) has a holding element for holding the sliding elements (6) in the initial position and/or terminal position and/or one or a plurality of intermediate positions thereof

7. Assembly tool according to one of the preceding claims, wherein the ring (2) is produced from a metal, and/or wherein the sliding elements (6) are produced from a plastics material and/or a metal.

8. Method for assembling a bearing (34) having an inner ring (30) and an outer ring (50), rolling members (32) being disposed therebetween, **characterized in that** the method comprises the following steps:
disposing the inner ring (30);
disposing the rolling members (32) and the cage segments (16) on the inner ring (30);
disposing the assembly tool (1) according to one of Claims 1 to 8 on the inner ring (30);
displacing the sliding elements (6) of the assembly tool (1) to the respective terminal position such that the sliding elements (6) are in each case disposed between two rolling members (32) and on a contact face (24) of a wall (18) of a cage segment that is disposed between the two rolling members (32), so as to delimit a radial mobility of the rolling members (32) in relation to the bearing ring (30), wherein the sliding elements (6) are displaced at an angle in relation to the ring face such that the sliding elements (6) in the terminal position thereof form the shape of a truncated cone;
inserting the inner ring (30) with the assembly tool (1) and the rolling members (32) onto a sleeve or shaft (42) and/or the outer ring (50); and removing the assembly tool (1).

## Revendications

1. Outil de montage (1) pour une bague de roulement (30) avec des corps de roulement (32),
l'outil de montage (1) présentant une bague (2) qui est configurée pour être agencée sur une surface latérale de la bague de roulement (30) et des éléments coulissants (6), la bague (2) présentant des logements (4) pour les éléments coulissants (6) et les éléments coulissants (6) étant répartis de manière uniforme sur la circonférence de la bague (2) et étant configurés pour être déplacés d'une position initiale à une position finale par rapport à la bague (2), les éléments coulissants (6) étant en outre configurés pour être agencés, dans la position finale, chacun entre deux corps de roulement (32) et sur une surface de contact (24) d'une paroi (18) d'un segment de cage (16) agencée entre les deux corps de roulement (32), afin de limiter une mobilité radiale des corps de roulement (32) par rapport à la bague de roulement (30), **caractérisé en ce que** les éléments coulissants (6) sont déplaçables angulairement par rapport à la surface de la bague, de telle sorte que les éléments coulissants (6) forment une forme tronconique dans leur position finale.

2. Outil de montage selon la revendication 1, dans lequel la bague de roulement (30) est une bague intérieure et les éléments coulissants (6) sont agencés, dans leur position finale, dans l'espace libre radialement à l'extérieur du diamètre du cercle partiel entre deux corps de roulement (32), la surface de contact (24) du segment de cage (16) et le chemin de roulement d'une bague extérieure (50) ou dans lequel la bague de roulement (50) est une bague extérieure et les éléments coulissants (6) sont agencés, dans leur position finale, dans l'espace libre radialement à l'intérieur du diamètre du cercle partiel entre deux corps de roulement (32), la surface de contact (24) du segment de cage (16) et le chemin de roulement d'une bague intérieure (30).

3. Outil de montage selon l'une quelconque des revendications précédentes, dans lequel l'outil de montage (1) présente un élément de centrage (14) afin de centrer la bague (2) sur le diamètre extérieur d'une bride de guidage (33) de la bague de roulement (30).

4. Outil de montage selon l'une quelconque des revendications précédentes, dans lequel l'outil de montage présente un moyen de fixation afin de fixer la bague (2) à la bague de roulement (30).

5. Outil de montage selon l'une quelconque des revendications précédentes, dans lequel l'outil de montage (1) présente un moyen d'écartement pour ajuster une distance axiale entre la bague (2) et la bague de roulement (30) et/ou un moyen d'écartement pour ajuster une distance radiale entre les éléments coulissants (6) et les chemins de roulement des corps de roulement (32).

6. Outil de montage selon l'une quelconque des revendications précédentes, dans lequel l'outil de montage (1) présente un élément de maintien afin de maintenir les éléments coulissants (6) dans leur position initiale et/ou leur position finale et/ou dans une ou plusieurs positions intermédiaires.

7. Outil de montage selon l'une quelconque des revendications précédentes, dans lequel la bague (2) est fabriquée en un métal et/ou dans lequel les éléments coulissants (6) sont fabriqués en une matière plastique et/ou en un métal.

8. Procédé de montage d'un palier (34) avec une bague intérieure (30) et une bague extérieure (50) entre lesquelles sont agencés des corps de roulement (32), **caractérisé en ce que** le procédé présente les étapes suivantes :
l'agencement de la bague intérieure (30),
l'agencement des corps de roulement (32) et des segments de cage (16) sur la bague intérieure (30),
l'agencement de l'outil de montage (1) selon l'une quelconque des revendications 1 à 8 sur la bague intérieure (30),
le déplacement des éléments coulissants (6) de l'outil de montage (1) dans leur position finale respective, de telle sorte que les éléments coulissants (6) sont agencés chacun entre deux corps de roulement (32) et sur une surface de contact (24) d'une paroi (18) d'un segment de cage agencée entre les deux corps de roulement (32), afin de limiter une mobilité radiale des corps de roulement (32) par rapport à la bague de roulement (30), les éléments coulissants (6) étant déplacés angulairement par rapport à la surface de la bague, de telle sorte que les éléments coulissants (6) forment une forme tronconique dans leur position finale,
l'insertion de la bague intérieure (30) avec l'outil de montage (1) et les corps de roulement (32) sur une douille ou un arbre (42) et/ou la bague extérieure (50), et
le retrait de l'outil de montage (1).
